# EUROPÄISCHE PATENTSCHRIFT

(11) **EP 1 693 647 B1**
(45) Veröffentlichungstag und Bekanntmachung des Hinweises auf die Patenterteilung: **04.11.2009**
(21) Anmeldenummer: 06100134.3
(22) Anmeldetag: 06.01.2006
(51) Int. Cl.: G01C 21/34

(54) **System zur abschnittsweisen Bestimmung einer Route**
System for determining a route in sections
Système pour la détermination par sections d'itinéraire

(30) Priorität: 01.02.2005 DE 102005004635
(43) Veröffentlichungstag der Anmeldung: 23.08.2006
(73) Patentinhaber: Continental Automotive GmbH, 30165 Hannover (DE)
(72) Erfinder: Kock, Ina, 64319, Pfungstadt (DE); Würz, Reiner, 35630, Ehringshausen (DE)

(56) Entgegenhaltungen:
- EP-A- 0 372 840
- EP-A- 0 575 943

## Beschreibung

Die Erfindung betrifft ein System zur Bestimmung einer Route mit einer Recheneinheit zur Berechnung der Route innerhalb eines Straßennetzes von einem Startpunkt zu einem Zielpunkt, einer mit der Recheneinheit verbundenen Eingabeeinheit, über die mindestens ein Planungsparameter eingebbar ist, welcher von der Recheneinheit während der Berechnung der Route berücksichtigt wird, sowie einem Speicher, in dem das Straßennetz digital abgelegt ist.

Ein System zur Bestimmung einer Route zwischen einem Startpunkt und einem Zielpunkt findet heute in verschiedenen Anwendungsgeräten Verwendung, so beispielsweise in Navigationsgeräten von Kraft- oder Seefahrzeugen, in tragbaren Geräten, wie PDA oder Mobilfunkeinrichtungen, oder auch in ortsfesten Computergeräten. Die berechnete Route kann für einen Fahrzeugführer oder auch einen Fußgänger bestimmt sein.

Bei den heutigen Routenbestimmungssystemen kann es teilweise vorkommen, dass im Nahbereich von Zielpunkten bzw. Zwischenzielpunkten Routenverläufe vorgeschlagen werden, die vom Benutzer als ungünstig empfunden werden. So kann es beispielsweise vorkommen, dass ein Zielpunkt in der Nähe einer Autobahn nicht über eine kurze Stichstraße direkt angefahren wird, sondern dass eine als Umweg empfundene Route über eine Bundesstraße vorgeschlagen wird.

Aufgabe der vorliegenden Erfindung ist es deshalb, ein System der eingangs beschriebenen Art anzugeben, mit dem dieses Problem behoben ist.

Diese Aufgabe wird mit einem System nach Anspruch 1 gelöst.

Der vorliegenden Erfindung liegt die Erkenntnis zugrunde, dass das genannte Problem der ungünstigen Routenführung in Zielpunktnähe auf die Arbeitsweise der heutigen Routenplanungsverfahren zurückzuführen ist. Diese Arbeitsweise wird bei heutigen Systemen im allgemeinen durch die Vorgabe eines oder mehrerer Planungsparameter beeinflusst. So kann ein Benutzer beispielsweise die Planung der schnellsten oder der kürzesten Route fordern oder bestimmte Straßenklassen als bevorzugt oder als unerwünscht einstufen. Der vom System zur Bestimmung einer Route daraufhin gestartete Routenplanungsalgorithmus sucht in einem digitalen Straßennetz nach einer Route, die die mit den Planungsparametern vorgegebenen Kriterien erfüllt. Die Straßen des digitalen Straßennetzes sind im allgemeinen einzelnen Straßenklassen zugeordnet, also beispielsweise Nebenstraßen, Hauptstraßen, Bundesstraßen und Autobahnen. Fordert der Benutzer beispielsweise die Berechnung der schnellsten Route, versucht der Routenplanungsalgorithmus sich möglichst innerhalb der höheren Straßenklassen zu bewegen. Erst in der Nähe des Zielpunktes wird wieder zu niedrigeren Straßenklassen gewechselt. Der Wechsel zwischen den Straßenklassen erfolgt dabei üblicherweise stufenweise, also möglichst zur nächsthöheren bzw. zur nächstniedrigeren Stra-βenklasse. In einem solchen Fall kann es geschehen, dass eine direkt von der Autobahn abgehende Nebenstraße unberücksichtigt bleibt, sofern auch eine Bundesstraße in unmittelbarer Nähe von der Autobahn abzweigt und zum Zielpunkt führt. Die Bundesstraße wurde dann vom Algorithmus als schnellerer Weg eingestuft. Dass dies mit einem Umweg von einigen Kilometern verbunden ist und dass zu Stoßzeiten eventuell auch der Zeitvorteil nicht mehr gegeben ist, wird vom System dabei unberücksichtigt gelassen.

Der Nachteil der bisher fehlenden Möglichkeit einer gezielten Beeinflussung der Arbeitsweise des Routenplanungsalgorithmus im Nahbereich eines Zielpunktes bzw. eines Zwischenzieles, wird nun mittels der Erfindung dahingehend behoben, dass über die Eingabeeinheit des Routenbestimmungssystems mindestens zwei Routenbereiche vorgebbar sind und jedem der Routenbereiche jeweils mindestens ein Planungsparameter zuordenbar ist. Die Recheneinheit berechnet dann eine Route, die aus mindestens zwei Routenabschnitten zusammengesetzt ist, wobei jeder Routenabschnitt jeweils einem Routenbereich zugeordnet ist und mit seiner überwiegenden Weglänge innerhalb des zugeordneten Routenbereiches liegt. Bei der Berechnung der einzelnen Routenabschnitte berücksichtigt die Recheneinheit jeweils den zum zugeordneten Routenbereich gehörenden Planungsparameter.

Mit dem erfindungsgemäßen System wird es also möglich, die Arbeitsweise des Routenplanungsalgorithmus abschnittsweise, d.h. zugeordnet zu einzelnen Routenabschnitten, zu beeinflussen. Die dafür definierten Routenbereiche dienen der Vorgabe der ungefähren räumlichen Grenzen der Routenabschnitte durch einen Benutzer. Jedem vorgegebenen Routenbereich wird während der Routenplanung jeweils ein Routenabschnitt zugeordnet, d.h. es entsteht dieselbe Anzahl von Routenabschnitten. Jeder Routenabschnitt liegt dabei mit seiner überwiegenden, d.h. mehr als halben Weglänge innerhalb des zugeordneten Routenbereiches.

Die Vorgabe der Routenbereiche kann entsprechend der Ausgestaltungen der Erfindung auf unterschiedliche Weise erfolgen. So ist es in einer Ausführung vorgesehen, dass über die Eingabeeinheit eine erste Entfernung vom Startpunkt und/oder eine zweite Entfernung vom Zielpunkt vorgebbar ist, wobei durch jede Entfernung der Radius eines kreisförmigen Routenbereiches bestimmt ist. Die Vorgabe der Entfernung von den Punkten kann dabei als Texteingabe oder grafisch per Maus erfolgen Weiterhin kann über die Eingabeeinheit mindestens ein zwischen dem Startpunkt und dem Zielpunkt liegender, weder den Start- noch den Zielpunkt einschließender Routenbereich festgelegt werden. Dieser Routenbereich kann beispielsweise ebenfalls als Kreis oder in Form einer Breitenausdehnung, beispielsweise als im rechten Winkel zur Verbindungsgeraden von Start- und Zielpunkt liegender Korridor, vorgegeben werden.

Weitere Routenbereiche können definiert werden, indem ausgehend von den Kreisen um den Start- und den Zielpunkt eine weitere Entfernung vorgegeben wird, wobei die weitere Entfernung den äußeren Radius eines kreisringförmigen, um den Start- oder Zielpunkt liegenden Routenbereiches bestimmt, während die erste oder zweite Entfernung den inneren Radius des kreisringförmigen Routenbereiches bestimmt. Die Definition von Kreisringen um die inneren Kreise um Start- und Zielpunkt herum kann auf eine beliebige Anzahl erweitert werden. Mittelpunkte der auf diese Weise entstehenden Kreisringe sind stets der Start- und/oder der Zielpunkt und der innere Radius der Kreisringe wird jeweils durch die zur aktuellen Entfernung nächstkleinere Entfernung bestimmt. Somit lassen sich zwischen Start- und Zielpunkt beliebig viele kreisringförmige Routenbereiche definieren.

In einer weiteren Ausgestaltung der Erfindung kann ein Routenbereich vorgegeben werden, indem über die Eingabeeinheit ein Zwischenpunkt definiert wird, der den Grenzpunkt bildet zwischen einem um den Startpunkt liegenden, kreis- bzw. kreisringförmigen Routenbereich und einem um den Zielpunkt liegenden kreis- bzw. kreisringförmigen Routenbereich. Auf diese Weise sind aneinander angrenzende Routenbereiche vorgebbar, so dass die gesamte zwischen Start- und Zielpunkt liegende, räumliche Ausdehnung exakt in Routenbereiche aufgeteilt werden kann.

In einer Weiterbildung der Erfindung berechnet die Recheneinheit zuerst eine erste Route anhand eines für die gesamte Route geltenden Planungsparameters berechnet und auf einer Ausgabeeinheit, beispielsweise in Form einer grafischen Darstellung oder als textuelle Routenführungshinweise, ausgibt. Anhand der berechneten Route kann der Benutzer entscheiden, ob er eine detailliertere Beeinflussung der Arbeitsweise des Routenplanungsalgorithmus wünscht. In diesem Fall legt er erst anschließend die mindestens zwei Routenbereiche und die jeweils zugehörigen Planungsparameter fest, woraufhin die Recheneinheit eine zweite Route bestehend aus den mindestens zwei Routenabschnitten berechnet. Diese iterative Herangehensweise bietet den Vorteil, dass sich der Benutzer einen ersten Überblick verschaffen kann, bevor er detailliertere Vorgaben macht.

Die Art der vorzugebenden Planungsparameter ist ebenfalls von der konkreten Ausgestaltungsform der Erfindung abhängig. So ist der mindestens eine Planungsparameter in einer Ausgestaltung mindestens ein Zahlenwert einer Bezugsgröße, der nicht über- und/oder nicht unterschritten werden soll. Demnach wird entweder ein Zahlenwert als eine obere oder eine untere Grenze festgelegt, oder es werden zwei Zahlenwerte zur Definition eines Wertebereiches mittels oberer und unterer Grenze vorgegeben.

In einer weiteren Ausgestaltung wird mittels des Planungsparameters bestimmt, dass bei der Berechnung des zugeordneten Routenabschnitts ein Maximum oder ein Minimum der Bezugsgröße erreicht werden soll.

Als Bezugsgrößen kommen in beiden Ausgestaltungen beispielsweise die für das Zurücklegen des Routenabschnitts benötigte Zeitdauer oder die Weglänge des Routenabschnitts in Frage.

Alternativ bzw. zusätzlich kann als Planungsparameter auch eine Straßenklasse sein, wobei entweder festgelegt wird, dass der Routenabschnitt bevorzugt entlang dieser Straßenklasse verlaufen soll oder dass der Routenabschnitt bevorzugt nicht entlang der Straßenklasse verlaufen soll.

Die Erfindung wird nachfolgend anhand eines Ausführungsbeispiels und der Zeichnung näher erläutert. Es zeigen
- Figur 1: ein System zur Bestimmung einer Route für ein Kraftfahrzeug;
- Figur 2: von einem Benutzer eingegebene Routenbereiche inklusive zugeordneter Planungsparameter;
- Figur 3: eine grafische Darstellung der Routenbereiche sowie einer auf deren Basis ermittelten Route;
- Figur 4: alternative Wahlmöglichkeit für Routenbereiche.

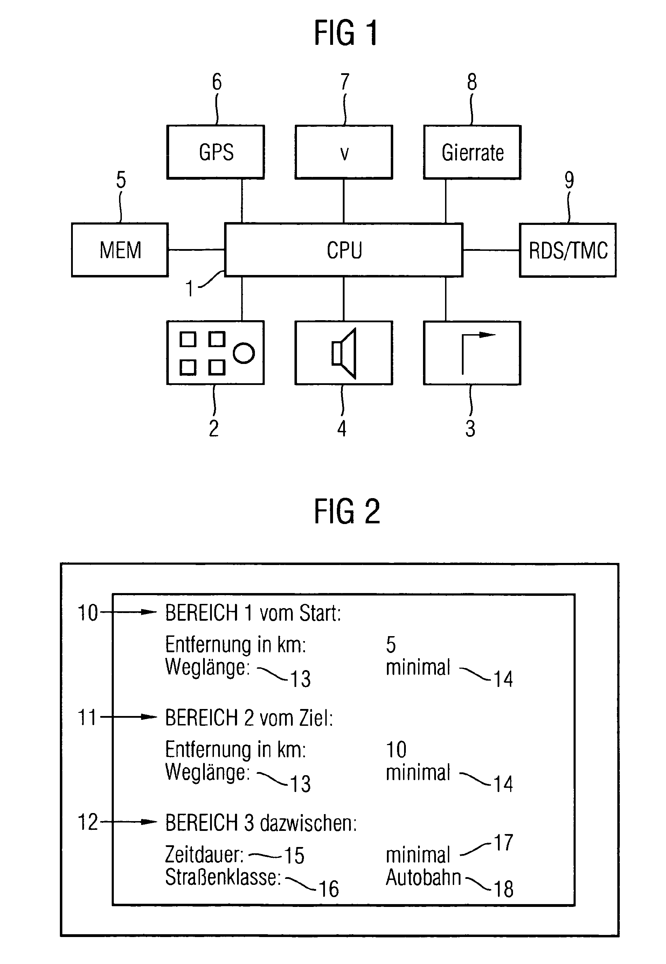

In Figur 1 ist ein System zur Bestimmung einer Route für ein Kraftfahrzeug dargestellt, bestehend aus einer Recheneinheit 1 sowie einer Eingabeeinheit 2 und einem Speicher 5, die jeweils mit der Recheneinheit 1 verbunden sind. Die Eingabeeinheit 2 besteht aus Bedientasten. Zusätzlich kann ein Zeigerbediengerät, wie eine Maus oder ein Dreh-Drücksteller vorhanden sein. In dem Speicher 5 ist eine digitale Straßenkarte abgelegt, die das Straßennetz abbildet, in welchem die Route zwischen einem Startpunkt und einem Zielpunkt berechnet werden soll. Das System zur Bestimmung einer Route ist Bestandteil eines in dem Kraftfahrzeug angeordneten Navigationssystems. Zu dem Navigationssystem gehören des weiteren eine satellitengestützte Positionserfassungseinheit 6, ein Geschwindigkeitssensor 7, ein Gierratensensor 8, ein Empfänger 9 für Verkehrsfunknachrichten sowie eine grafische Ausgabeeinheit 3 und eine akustische Ausgabeeinheit 4. Das Navigationssystem arbeitet in der bekannten Weise, d.h. die Recheneinheit 1 vergleicht die von dem Routenbestimmungssystem ermittelte Route mit der tatsächlich zurückgelegten Route und generiert Fahrhinweise, die zur Unterstützung der Verfolgung der geplanten Route an den Fahrzeugführer ausgegeben werden. Ändern sich die Verkehrsbedingungen wird eine neue Route geplant.

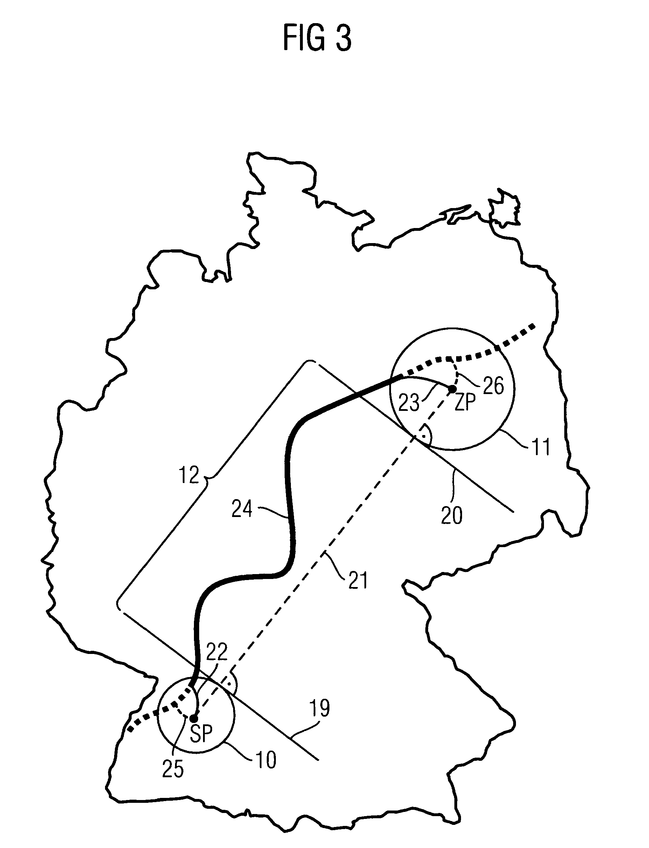

Über die Eingabeeinheit 2 kann ein Benutzer Routenbereiche definieren sowie zugeordnete Planungsparameter eingeben, die während der Bestimmung der Route berücksichtigt werden. In Figur 2 ist eine Textausgabe dargestellt, die das Ergebnis derartiger Benutzereingaben wiedergibt. Beispielsweise per Auswahlmenü wurden insgesamt drei Routenbereiche festgelegt. Der erste Routenbereich 10 wird ausgehend vom Startpunkt der zu planenden Route festgelegt, der zweite Routenbereich 11 ausgehend vom Zielpunkt und der dritte Routenbereich 12 ist als der Bereich zwischen dem ersten und dem zweiten Routenbereich definiert. Die räumliche Ausdehnung der Routenbereiche 10 und 11 und wird mittels einer jeweils zugeordneten Entfernung vom Start- bzw. Zielpunkt bestimmt. Die Entfernung beschreibt in diesem Beispiel jeweils einen Kreis um den Startpunkt SP bzw. den Zielpunkt ZP, wie in Figur 3 dargestellt ist. Der erste Routenbereich 10 hat dabei einen Kreisradius von 5 km und der zweite Routenbereich 11 einen Kreisradius von 10 km. Der dritte Routenbereich 12 zwischen dem ersten und zweiten Routenbereich 10 und 11 wird durch zwei Geraden 19 und 20 bestimmt, die jeweils senkrecht zur Verbindungsgeraden 21 des Startpunktes SP mit dem Zielpunkt ZP verlaufen.

Zu jedem Routenbereich 10, 11 und 12 wurden von dem Benutzer Planungsparameter zu zugehörigen Bezugsgrößen festgelegt. Die Art der Bezugsgrößen wurden vorab per Auswahlmenü bestimmt. In Figur 2 ist zu sehen, dass als Bezugsgröße für den ersten und zweiten Routenbereich 10 und 11 die Weglänge 13 gewählt wurde und als zugehöriger Planungsparameter 14 festgelegt wurde, dass diese Weglänge minimal sein soll. Im dritten Routenbereich 13 soll dagegen ein Routenabschnitt geplant werden, für dessen Zurücklegung eine minimale Zeitdauer benötigt wird. Dies wird über die Bezugsgröße 15 und den Planungsparameter 17 definiert. Dieser Routenabschnitt soll desweiteren bevorzugt auf Autobahnen verlaufen, was mit der Bezugsgröße 16 und dem Planungsparameter 18 bestimmt ist.

Die entsprechend dieser Vorgaben geplante Route ist Figur 3 zu entnehmen. Und zwar verläuft die Route entlang des ersten Routenabschnitts 22, des zweiten Routenabschnitts 24 und des dritten Routenabschnitts 23, die jeweils als durchgezogene Linie dargestellt sind und mit ihrer überwiegenden Weglänge in den zugehörigen Routenbereichen 10, 11 bzw. 12 liegen. Routenabschnitt 24 verläuft vollständig entlang einer Autobahn, die an der breiteren Linie zu erkennen ist, während die Routenabschnitte 22 und 23 jeweils entlang einer von der Autobahn abzweigenden Hauptstraße führen. Im Fall, dass der Benutzer die Unterteilung in die Routenbereiche 10, 11 und 12 nicht vorgenommen und für die gesamte Route eine minimale Zeitdauer gefordert hätte, wäre eine Route entlang der unterbrochen dargestellten Straßen berechnet worden. Das System zur Bestimmung einer Route hätte dann vorgeschlagen, über die Straße 25 auf die Autobahn aufzufahren, da die angenommene Fahrzeit entlang der Straße 25 und des nachfolgenden Autobahnabschnitts bis zur Anschlussstelle des Routenabschnitts 22 geringer ausfällt als entlang des Routenabschnitts 22. Dem Benutzer erscheint dieser Umweg jedoch nicht unbedingt als sinnvoll, da er sich zuerst von seiner eigentlichen Zielrichtung wegbewegt. Den Umweg nimmt er tatsächlich nur dann in Kauf, wenn sich ein deutlicher Zeitunterschied ergibt. Da dies bei der hier dargestellten Konstellation nicht zu erwarten ist, wird er die aufgrund der abschnittsweisen Routenberechnung vorgeschlagene Route als günstiger empfinden. Ähnlich verhält es sich im Zielbereich um den Zielpunkt ZP. Auch hier würde das System entsprechend der angenommenen Fahrzeit eine spätere Autobahnausfahrt und die Benutzung der Straße 26 empfehlen. Dies führt wiederum zu einer Verlängerung der Wegstrecke, die vom Benutzer kaum akzeptiert wird. Mit dem entsprechend der Erfindung ausgestalteten System zur Bestimmung einer Route gelingt es demnach, eine Routenplanung vorzunehmen, die zu Ergebnissen kommt, die besser dem menschlichen Empfinden eines sinnvollen Routenverlaufs entsprechen.

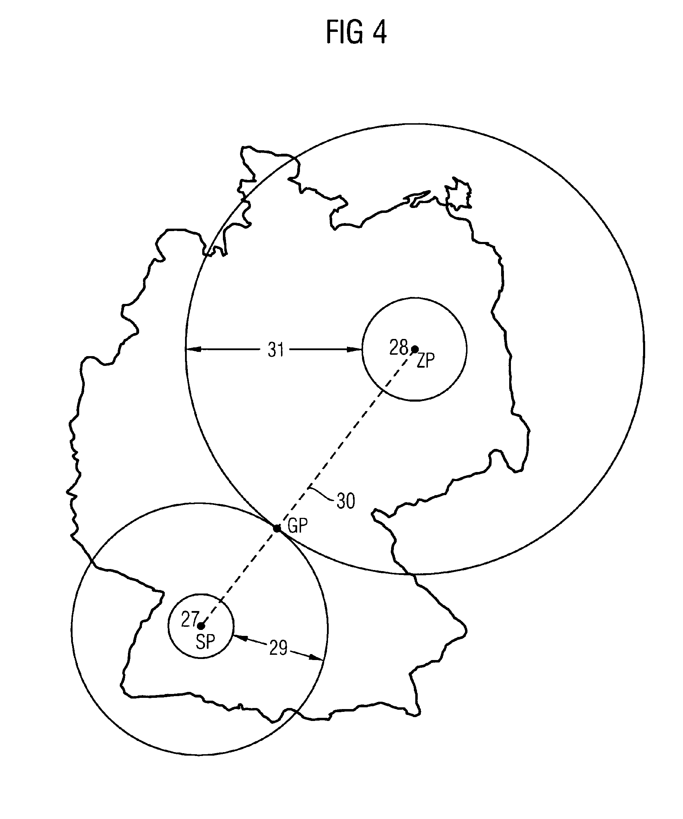

In Figur 4 sind alternative Möglichkeiten zur Bestimmung der räumlichen Ausdehnung von Routenbereichen zu sehen. Der Benutzer verwendet zur Eingabe in diesem Beispiel ein Zeigerbediengerät und verfolgt seine Eingaben grafisch auf der Ausgabeeinheit 3. In einem ersten Schritt wählt er um den Startpunkt SP durch Ziehen eines Mauszeigers einen ersten Kreisradius entsprechend einer ersten Entfernung vom Startpunkt SP.

Auf diese Weise wird der Routenbereich 27 als Inneres des entstandenen Kreises definiert. In einem zweiten Schritt legt der Benutzer für den Zielpunkt ZP eine zweite Entfernung fest, woraus der kreisförmige Routenbereich 28 resultiert. Anschließend wählt er ausgehend vom Startpunkt SP eine dritte Entfernung, die bis zum Punkt GP reicht, wobei der Punkt GP während des Eingabevorgangs noch nicht angezeigt wird. Der durch GP führende Kreisradius beschreibt die äußere Begrenzung eines Kreisrings, dessen innere Grenze durch den Kreis des Routenbereichs 27 festgelegt ist. Die Fläche dieses Kreisrings legt den Routenbereich 29 fest. Nun wählt der Benutzer, beispielsweise über ein Menü, die Eingabemöglichkeit eines Zwischenpunktes. Dafür wird eine Verbindungsgerade 30 zwischen dem Startpunkt SP und dem Zielpunkt ZP eingeblendet und auf dieser Geraden 30 ein verschiebbarer Zwischenpunkt GP angezeigt. Diesen Zwischenpunkt GP legt der Benutzer nun mittels des Mauszeigers auf den äußeren Kreis des Routenbereichs 29, wodurch der Grenzpunkt zwischen dem Routenbereich 29 und einem um den Zielpunkt ZP entstehenden Routenbereich 30 bestimmt ist. Der Routenbereich 31 ist wiederum ein Kreisring, dessen äußere Grenze durch GP verläuft und dessen innere Grenze durch den Kreis des Routenbereichs 28 definiert ist. Für die vier entstandenen Routenbereiche 27, 28, 29 und 31 kann der Benutzer in einem nächsten Schritt Planungsparameter festlegen.

## Patentansprüche

1. System zur Bestimmung einer Route mit einer Recheneinheit (1) zur Berechnung der Route innerhalb eines Straßennetzes von einem Startpunkt (SP) zu einem Zielpunkt (ZP), einer mit der Recheneinheit (1) verbundenen Eingabeeinheit (2), über die mindestens ein Planungsparameter eingebbar ist, welcher von der Recheneinheit (1) während der Berechnung der Route berücksichtigt wird, sowie einem Speicher (5), in dem das Straßennetz digital abgelegt ist,
**dadurch gekennzeichnet, dass**
über die Eingabeeinheit (2) mindestens zwei Routenbereiche (10, 11, 12) vorgebbar sind, jedem der Routenbereiche (10, 11, 12) jeweils mindestens ein Planungsparameter (14, 17, 18) zuordenbar ist und dass die Recheneinheit (1) eine Route berechnet, die aus mindestens zwei Routenabschnitten (22, 23, 24) zusammengesetzt ist, wobei jeder Routenabschnitt (22, 23, 24) jeweils einem Routenbereich (10, 11, 12) zugeordnet ist und dabei mit seiner überwiegenden Weglänge innerhalb des zugeordneten Routenbereiches (10, 11, 12) liegt, und wobei die Recheneinheit (1) jeden Routenabschnitt (22, 23, 24) unter Berücksichtigung des mindestens einen, zum zugeordneten Routenbereich (10, 11, 12) gehörenden Planungsparameters (14, 17, 18) berechnet.

2. System nach Anspruch 1, **dadurch gekennzeichnet, dass** über die Eingabeeinheit (2) eine erste Entfernung vom Startpunkt (SP) und/oder eine zweite Entfernung vom Zielpunkt (ZP) vorgebbar ist, wobei durch jede Entfernung der Radius eines kreisförmigen, um den Startpunkt (SP) und/oder den Zielpunkt (ZP) liegenden Routenbereiches (10, 11, 27, 28) bestimmt ist.

3. System nach einem der vorhergehenden Ansprüche, **dadurch gekennzeichnet, dass** über die Eingabeeinheit (2) mindestens ein zwischen dem Startpunkt (SP) und dem Zielpunkt (ZP) liegender Routenbereich (12, 29, 31) festlegbar ist.

4. System nach einem der Ansprüche 2 oder 3, **dadurch gekennzeichnet, dass** mindestens eine weitere Entfernung vorgebbar ist, wobei die weitere Entfernung den äußeren Radius eines kreisringförmigen, um den Startpunkt (SP) oder den Zielpunkt (ZP) liegenden Routenbereiches (29, 31) bestimmt, während die erste oder zweite Entfernung den inneren Radius (27, 28) des kreisringförmigen Routenbereiches (29, 31) bestimmt.

5. System nach einem der vorhergehenden Ansprüche 2 bis 4, **dadurch gekennzeichnet, dass** über die Eingabeeinheit (2) ein Zwischenpunkt (GP) vorgebbar ist, der den Grenzpunkt bildet zwischen einem um den Startpunkt (SP) liegenden, kreis- bzw. kreisringförmigen Routenbereich (29) und einem um den Zielpunkt (ZP) liegenden kreis- bzw. kreisringförmigen Routenbereich (31).

6. System nach einem der vorhergehenden Ansprüche, **dadurch gekennzeichnet, dass** eine mit der Recheneinheit (1) verbundene grafische Ausgabeeinheit (3) vorhanden ist, dass die Recheneinheit (1) eine erste Route anhand eines für die gesamte Route geltenden Planungsparameters berechnet und auf der Ausgabeeinheit (3) ausgibt und dass die Recheneinheit (1) anschließend, nach Festlegung der mindestens zwei Routenbereiche (10, 11, 12) und des jeweils zugehörigen mindestens einen Planungsparameters (14, 17, 18), eine zweite Route bestehend aus den mindestens zwei Routenabschnitten (22, 23, 24) berechnet.

7. System nach einem der vorhergehenden Ansprüche, **dadurch gekennzeichnet, dass** der mindestens eine Planungsparameter mindestens ein Zahlenwert einer Bezugsgröße ist, der nicht über- und/oder nicht unterschritten werden soll.

8. System nach einem der vorhergehenden Ansprüche, **dadurch gekennzeichnet, dass** der mindestens ein Planungsparameter (14, 17, 18) vorgibt, dass bei der Berechnung des zugeordneten Routenabschnitts (22, 23, 24) ein Maximum oder ein Minimum der Bezugsgröße (13, 15) erreicht werden soll.

9. System nach einem der vorhergehenden Ansprüche, **dadurch gekennzeichnet, dass** die Bezugsgröße (15) des mindestens einen Planungsparameters (17) die für das Zurücklegen des Routenabschnitts (24) benötigte Zeitdauer ist.

10. System nach einem der vorhergehenden Ansprüche, **dadurch gekennzeichnet, dass** die Bezugsgröße (13) des mindestens einen Planungsparameters (14) die Weglänge des Routenabschnitts (22, 23) ist.

11. System nach einem der vorhergehenden Ansprüche, **dadurch gekennzeichnet, dass** der Planungsparameter (18) eine Straßenklasse ist.

12. System nach Anspruch 11, **dadurch gekennzeichnet, dass** mit der Straßenklasse vorgegeben ist, dass der Routenabschnitt (24) bevorzugt entlang dieser Straßenklasse verlaufen soll.

13. System nach Anspruch 11, **dadurch gekennzeichnet, dass** mit der Straßenklasse vorgegeben ist, dass der Routenabschnitt bevorzugt nicht entlang dieser Straßenklasse verlaufen soll.

## Claims

1. System for determining a route with a computation unit (1) for calculating the route within a road network from a starting point (SP) to a destination (ZP), with an input unit (2) which is connected to the computation unit (1) and which can be used to input at least one planning parameter which is taken into account by the computation unit (1) during the calculation of the route, and with a memory (5) which stores the road network in digital form,
**characterized in that**
the input unit (2) can be used to prescribe at least two route regions (10, 11, 12), each of the route regions (10, 11, 12) can have at least one respective planning parameter (14, 17, 18) associated with it and **in that** the computation unit (1) calculates a route which is made up of at least two route sections (22, 23, 24), wherein each route section (22, 23, 24) is respectively associated with a route region (10, 11, 12) and has its predominant path length situated within the associated route region (10, 11, 12), and wherein the computation unit (1) calculates each route section (22, 23, 24) taking account of the at least one planning parameter (14, 17, 18) belonging to the associated route region (10, 11, 12),

2. System according to Claim 1, **characterized in that** the input unit (2) can be used to prescribe a first distance from the starting point (SP) and/or a second distance from the destination (ZP), wherein each distance determines the radius of a circular route region (10, 11, 27, 28) situated around the starting point (SP) and/or the destination (ZP).

3. System according to one of the preceding claims, **characterized in that** the input unit (2) can be used to stipulate at least one route region (12, 29, 31) situated between the starting point (SP) and the destination (ZP).

4. System according to one of Claims 2 and 3, **characterized in that** at least one further distance can be prescribed, wherein the further distance determines the outer radius of an annular route region (29, 31) situated around the starting point (SP) or the destination (ZP), while the first or second distance determines the inner radius (27, 28) of the annular route region (29, 31).

5. System according to one of the preceding Claims 2 to 4, **characterized in that** the input unit (2) can be used to prescribe an intermediate point (GP) which forms the border point between a circular or annular route region (29) situated around the starting point (SP) and a circular or annular route region (31) situated around the destination (ZP).

6. System according to one of the preceding claims, **characterized in that** a graphical output unit (3) connected to the computation unit (1) is present, **in that** the computation unit (1) calculates a first route using a planning parameter which is valid for the entire route and outputs it on the output unit (3), and **in that** the computation unit (1) then, having stipulated the at least two route regions (10, 11, 12) and the respective associated at least one planning parameter (14, 17, 18), calculates a second route comprising the at least two route sections (22, 23, 24).

7. System according to one of the preceding claims, **characterized in that** the at least one planning parameter is at least one numerical value for a reference variable which cannot be exceeded and/or cannot be undershot.

8. System according to one of the preceding claims, **characterized in that** the at least one planning parameter (14, 17, 18) prescribes that when calculating the associated route section (22, 23, 24) the aim is to achieve a maximum or a minimum for the reference variable (13, 15).

9. System according to one of the preceding claims, **characterized in that** the reference variable (15) of the at least one planning parameter (17) is the period of time required for covering the route section (24).

10. System according to one of the preceding claims, **characterized in that** the reference variable (13) of the at least one planning parameter (14) is the path length of the route section (22, 23).

11. System according to one of the preceding claims, **characterized in that** the planning parameter (18) is a road class.

12. System according to Claim 11, **characterized in that** the road class is used to prescribe that the route section (24) is preferably intended to run along this road class.

13. System according to Claim 11, **characterized in that** the road class is used to prescribe that the route section is preferably not intended to run along this road class.

## Revendications

1. Système destiné à déterminer un itinéraire et comportant une unité de calcul (1) pour le calcul de l'itinéraire à l'intérieur d'un réseau de routes entre un point de départ (SP) et un point de destination (ZP), une unité de saisie (2), reliée à l'unité de calcul (1) et par l'intermédiaire de laquelle il est possible de saisir au moins un paramètre de planification dont l'unité de calcul (1) tient compte lors du calcul de l'itinéraire, ainsi qu'une mémoire (5), dans laquelle le réseau de routes est stocké sous forme numérique,
**caractérisé par le fait que**
au moins deux zones (10, 11, 12) pour l'itinéraire peuvent être définies au préalable par l'intermédiaire de l'unité de saisie (2), qu'il est possible d'attribuer au moins un paramètre de planification (14, 17, 18) à chacune des zones (10, 11, 12) pour l'itinéraire et que l'unité de calcul (1) calcule un itinéraire qui se compose de au moins deux sections d'itinéraire (22, 23, 24), chaque section d'itinéraire (22, 23, 24) correspondant à une zone (10, 11, 12) pour l'itinéraire et se trouvant, en même temps, sur la plus grande partie de sa longueur, à l'intérieur de la zone (10, 11, 12) pour l'itinéraire correspondante et l'unité de calcul (1) calculant chaque section d'itinéraire (22, 23, 24) en tenant compte du au moins un paramètre de planification (14, 17, 18) attribué à la zone (10, 11, 12) pour l'itinéraire correspondante.

2. Système selon la revendication 1, **caractérisé par le fait qu'**il est possible de prescrire, par l'intermédiaire de l'unité de saisie (2), une première distance du point de départ (SP) et/ou une deuxième distance du point de destination (ZP), chaque distance définissant le rayon d'une zone circulaire (10, 11, 27, 28) pour l'itinéraire se trouvant autour du point de départ (SP) et/ou du point de destination (ZP).

3. Système selon l'une des revendications précédentes, **caractérisé par le fait qu'**il est possible de prescrire, par l'intermédiaire de l'unité de saisie (2), au moins une zone (12, 29, 31) pour l'itinéraire se trouvant entre le point de départ (SP) et le point de destination (ZP).

4. Système selon l'une des revendications 2 ou 3, **caractérisé par le fait qu'**il est possible de prescrire au moins une autre distance supplémentaire, cette autre distance supplémentaire définissant le rayon extérieur d'une zone annulaire (29, 31) pour l'itinéraire se trouvant autour du point de départ (SP) ou du point de destination (ZP), alors que la première ou la deuxième distance définissent le rayon intérieur (27, 28) de la zone annulaire (29, 31) pour l'itinéraire.

5. Système selon l'une des revendications précédentes 2 à 4, **caractérisé par le fait qu'**il est possible de prescrire, par l'intermédiaire de l'unité de saisie (2), un point intermédiaire (GP) qui représente la limite entre une zone circulaire ou, respectivement, annulaire (29) pour l'itinéraire se trouvant autour du point de départ (SP) et une zone circulaire ou, respectivement, annulaire (31) pour l'itinéraire se trouvant autour du point de destination (ZP).

6. Système selon l'une des revendications précédentes, **caractérisé par le fait qu'**il y a une unité graphique de sortie (3) reliée à l'unité de calcul (1), que l'unité de calcul (1) calcule un premier itinéraire à l'aide d'un paramètre de planification valable pour l'ensemble de l'itinéraire et édite cet itinéraire sur l'unité de sortie (3) et que, ensuite, l'unité de calcul (1) calcule, une fois que les au moins deux zones (10, 11, 12) pour l'itinéraire et le au moins un paramètre de planification (14, 17, 18) correspondant à chaque zone pour l'itinéraire ont été fixés, un deuxième itinéraire se composant des au moins deux sections d'itinéraires (22, 23, 24).

7. Système selon l'une des revendications précédentes, **caractérisé par le fait que** le au moins un paramètre de planification est au moins une valeur numérique d'une grandeur de référence qui ne doit être dépassée ni vers le haut, ni vers le bas.

8. Système selon l'une des revendications précédentes, **caractérisé par le fait que** le au moins un paramètre de planification (14, 17, 18) prescrit que, lors du calcul de la section d'itinéraire ( 22, 23, 24) correspondante, un maximum ou un minimum de la grandeur de référence (13, 15) doit être atteint.

9. Système selon l'une des revendications précédentes, **caractérisé par le fait que** la grandeur de référence (15) du au moins un paramètre de planification (17) est le temps nécessaire pour parcourir la section d'itinéraire (24).

10. Système selon l'une des revendications précédentes, **caractérisé par le fait que** la grandeur de référence (13) du au moins un paramètre de planification (14) est la longueur de la section d'itinéraire (22, 23).

11. Système selon l'une des revendications précédentes, **caractérisé par le fait que** le paramètre de planification (18) est une catégorie de route.

12. Système selon la revendication 11, **caractérisé par le fait que**, avec la catégorie de route, il est prescrit que la section d'itinéraire (24) doit, d'une façon préférentielle, passer le long de cette catégorie de route.

13. Système selon la revendication 11, **caractérisé par le fait que**, avec la catégorie de route, il est prescrit que la section d'itinéraire ne doit pas, d'une façon préférentielle, passer le long de cette catégorie de route.
